# EUROPEAN PATENT APPLICATION

(11) **EP 4 389 521 A1**
(43) Date of publication of application: **26.06.2024**
(21) Application number: 23214141.6
(22) Date of filing: 05.12.2023
(51) Int. Cl.: B60Q 1/50, B60Q 1/26

(54) **WORK VEHICLE**

(30) Priority: 19.12.2022 JP 2022202114
(71) Applicant: Yanmar Holdings Co., Ltd., Osaka-shi, Osaka (JP)
(72) Inventor: LEE, Seungkyu, Okayama (JP)
(74) Representative: Novagraaf International SA

(57) **Abstract**

A work vehicle (1) includes a cabin (30) covering a driving part and includes a laminated lamp (150) for providing an indication used for notification of various states of a machine body (4) of the work vehicle (1), the laminated lamp (150) being provided in a state of being supported by a laminated lamp support part (160) provided in the cabin (30) such that the state indication device (150) is in a position easily visible from the outside of the machine body (4) and firmly supported.

## Description

### TECHNICAL FIELD

The present invention relates to a work vehicle including a state indication device for providing an indication used for notification of various states of a machine body in a configuration of, for example, working while automatically traveling.

### BACKGROUND ART

Conventionally, there has been a state indication device for providing an indication used for notification of various states of a machine body in a combine harvester as a work vehicle that works while automatically traveling on the basis of positional information received by a receiving device such as a Global Navigation Satellite System (GNSS) receiver (see Patent Document 1, for example). The state indication device is provided in a position visible from the outside of the machine body and is used to notify a person outside the machine body.

Patent Document 1 discloses a configuration in which an indication lamp that switches indication content according to a reception state of radio waves sent from a GPS satellite is provided, as a state indication device, in a combine harvester capable of automatically traveling along a predetermined traveling route based on GPS positional information. A person outside the machine body is notified of the reception state of the radio waves by the indication content of the indication lamp. In the configuration disclosed in Patent Document 1, the indication lamp is provided upright on an upper part of a cabin covering a driving part.

### PRIOR ART DOCUMENT

### PATENT DOCUMENT

Patent Document 1: Japanese Unexamined Patent Publication No. 2009-240183

### SUMMARY OF INVENTION

### TECHNICAL PROBLEM

A state indication device in a work vehicle is required to be easily visible from the outside of a machine body and to be firmly supported so as not to fall off during work. In this regard, Patent Document 1 does not specifically describe an arrangement position or a support structure of the indication lamp.

The present invention has been made in view of the above problems, and an object of the present invention is to provide, in a configuration in which a state indication device for providing an indication used for notification of various states of a machine body, a work vehicle in which the state indication device can be arranged in a position easily visible from the outside of the machine body and which can firmly support the state indication device.

### SOLUTION TO PROBLEM

A work vehicle according to the present invention includes a cabin covering a driving part, the work vehicle including a state indication device for providing an indication used for notification of various states of a machine body, in which the state indication device is provided in a state of being supported by a support part provided in the cabin.

In a work vehicle according to another aspect of the present invention, the state indication device in the work vehicle is arranged in a central part in the left-right direction of the machine body.

In a work vehicle according to another aspect of the present invention, the state indication device in the work vehicle is provided in a manner that the posture of the state indication device is changeable.

In a work vehicle according to another aspect of the present invention, the support part in the work vehicle is configured in a manner that the posture of the state indication device is changeable from a use posture which is a posture of the state indication device in a use state to a retracted posture which is a posture of the state indication device in a retracted state.

In a work vehicle according to another aspect of the present invention, the work vehicle includes an antenna unit provided in an upper part of one side face part among right and left side face parts of the cabin, and an antenna support member provided on the one side face part and supporting the antenna unit, in which the support part includes the antenna support member.

In a work vehicle according to another aspect of the present invention, the support part in the work vehicle includes a member connecting the state indication device and the antenna unit together.

### ADVANTAGEOUS EFFECTS OF INVENTION

According to the present invention, a state indication device for providing an indication used for notification of various states of a machine body can be arranged in a position easily visible from the outside of the machine body and can be firmly supported.

### BRIEF DESCRIPTION OF DRAWINGS

Fig. 1 is a left-side view of a combine harvester according to one embodiment of the present invention.
Fig. 2 is a right-side view of the combine harvester according to one embodiment of the present invention.
Fig. 3 is a plan view of the combine harvester according to one embodiment of the present invention.
Fig. 4 is a left-side view of a cabin according to one embodiment of the present invention.
Fig. 5 is a front view of the cabin according to one embodiment of the present invention.
Fig. 6 is a plan view of the cabin according to one embodiment of the present invention.
Fig. 7 is a left-side view illustrating an antenna unit and a support configuration thereof according to one embodiment of the present invention.
Fig. 8 is a front view illustrating the antenna unit and the support configuration thereof according to one embodiment of the present invention.
Fig. 9 is a plan view illustrating the antenna unit and the support configuration thereof according to one embodiment of the present invention.
Fig. 10 is a left-side view illustrating a laminated lamp and a support configuration thereof according to one embodiment of the present invention.
Fig. 11 is a rear view illustrating the laminated lamp and the support configuration thereof according to one embodiment of the present invention.
Fig. 12 is a left rear perspective view illustrating the laminated lamp and the support configuration thereof according to one embodiment of the present invention.
Fig. 13 is a left-side view illustrating the laminated lamp according to one embodiment of the present invention in a state where the posture of the laminated lamp is changed.

### DESCRIPTION OF EMBODIMENTS

In an embodiment of the present invention described below, a combine harvester is described as an example of a work vehicle according to the present invention. However, the work vehicle according to the present invention is not limited thereto as long as it includes a cabin covering a driving part. Examples of the work vehicle to which the present invention is applied include a tractor and a wheel loader for civil engineering work, in addition to various combine harvesters such as a head-feeding combine harvester and a normal combine harvester.

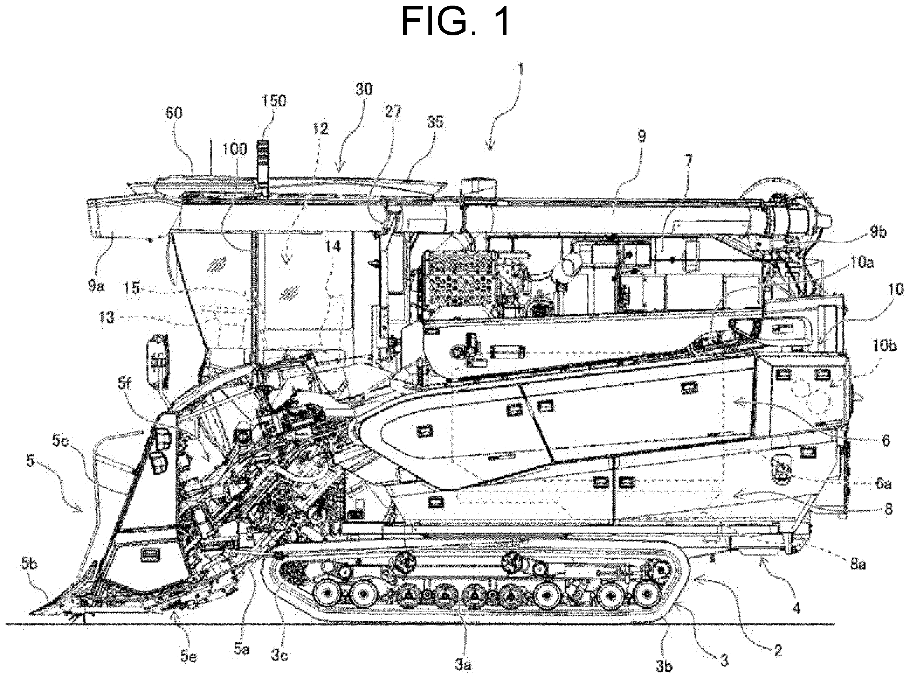

An overall configuration of a combine harvester 1 as the work vehicle according to the present embodiment will be described with reference to Fig. 1 to Fig. 3. In the following description, the left side and the right side toward the front (the left in Fig. 1) of the combine harvester 1 are referred to as the left side and the right side in the combine harvester 1, respectively.

As shown in Fig. 1 to Fig. 3, the combine harvester 1 includes: a traveling part 2 configured as a crawler-type traveling device having a pair of right and left crawler parts 3, 3; and a traveling machine body 4 supported by the traveling part 2. The combine harvester 1 includes a reaping part 5 that reaps grain culms, a threshing part 6 that threshes the grain culms reaped by the reaping part 5, a grain tank 7 as a grain storing part that stores grains taken out from the threshing part 6, and a discharging auger 9 as a grain discharging device that discharges grains inside the grain tank 7. The combine harvester 1 includes an engine 11 as a drive source mounted on the traveling machine body 4. The combine harvester 1 includes a cabin 30 that covers a driving part 12.

Each crawler part 3 constituting the traveling part 2 has a track frame 3a extending in the front-rear direction below the traveling machine body 4, various rotating bodies such as a driving sprocket 3c supported by the track frame 3a, and a crawler track 3b wound around these rotating bodies. The crawler parts 3 receive transmission of power from the engine 11 at the driving sprocket 3c to be driven.

The reaping part 5 is a device configuration for taking in grain culms such as rice and wheat in a field while reaping them, and is provided in a front part of the traveling machine body 4. The reaping part 5 is provided on the front side of the traveling machine body 4 over the approximately entire width of the machine body of the combine harvester 1. The reaping part 5 is mounted to the traveling machine body 4 in such a manner that the reaping part 5 can be rotated around a predetermined axis via a hydraulic cylinder for elevation, and is provided in such a manner that elevation of the reaping part 5 can be adjusted by a rotary motion caused by an expansion and contraction motion of the hydraulic cylinder.

The reaping part 5 has a reaping support machine frame 5a as a reaping frame, and this reaping support machine frame 5a is configured to support a grass divider 5b, a raising device 5c, a reaping blade device 5e, and a grain culm conveying device 5f. The reaping part 5 divides grain culms in a field from grass by the grass divider 5b, raises the divided grain culms by the raising device 5c, and conveys the raised grain culms to the rear side by the grain culm conveying device 5f and simultaneously cuts and reaps the grain culms by the reaping blade device 5e. The reaping part 5 conveys the reaped grain culms to the threshing part 6.

Each device constituting the reaping part 5 is operated by power transmitted from the engine 11.

The threshing part 6 and the grain tank 7 are provided side-by-side on the traveling machine body 4. The threshing part 6 and grain tank 7 are arranged on the left side and the right side of the machine body, respectively. The combine harvester 1 reaps grain culms with the reaping part 5, threshes grain culms with the threshing part 6, and so on, while traveling with the traveling part 2.

The threshing part 6 has a threshing cylinder 6a with the front-rear direction as a rotation axis direction, and a grain culm feeding device provided on the left of the threshing cylinder 6a. The grain culm feeding device holds feet of the grain culms reaped by the reaping part 5 and conveys the grain culms rearward in a lying position with tips of the grain culms on the threshing cylinder 6a side. The grain culm feeding device has a feed chain wound around a plurality of sprockets with the left-right direction as a rotation axis direction, and a grain culm feed clamper that works with the feed chain to clamp the feet of the grain culms.

A sorting part 8 that sorts the grain culms threshed by the threshing part 6 is provided below the threshing part 6 on the traveling machine body 4. The sorting part 8 has an oscillation sorting device 8a, a wind sorting device, and a grain conveying device. The sorting part 8 sorts, through oscillation, the threshed grain culms falling from the threshing part 6 using the oscillation sorting device 8a, and sorts, by means of wind, the sorted product after oscillation sorting using the wind sorting device. The sorting part 8 conveys, among the sorted product after wind sorting, grains to the right toward the grain tank 7 using the grain conveying device, and blows straw debris, dust, and the like rearward using the wind sorting device to discharge same to the outside of the machine body. The grains conveyed by the grain conveying device toward the grain tank 7 are stored in the grain tank 7.

The discharging auger 9 is provided on the traveling machine body 4. The discharging auger 9 is provided rotatably with respect to the traveling machine body 4 via a vertical take-out conveyor 9b provided on the right rear side of the traveling machine body 4. The discharging auger 9 internally includes a screw conveyor and has a discharging port 9a in a tip end part thereof. In addition, the discharging auger 9 is provided such that the discharging auger 9 can move up and down and rotate with the base part thereof as a center.

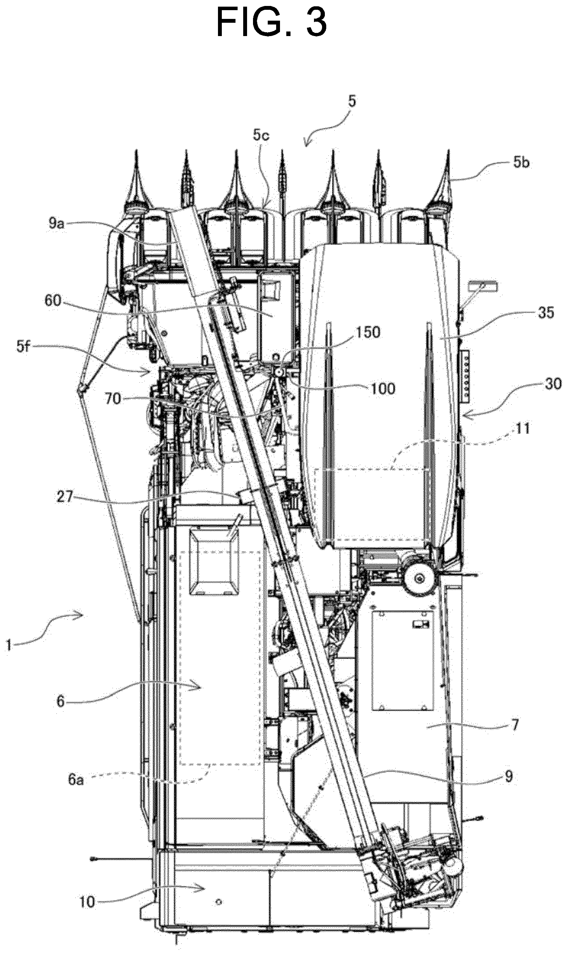

The discharging auger 9 in a retracted state extends horizontally from the vertical take-out conveyor 9b on the right rear side of the traveling machine body 4 to the left forward. In the retracted state, the discharging auger 9 extends along a diagonal line of the machine body with a tip end part of the discharging auger 9 positioned in a left-hand part of the reaping part 5 in the plan view (see Fig. 3). The discharging auger 9 takes the retracted state when the discharging auger 9 is supportively placed on an auger rest 27 as an auger receiving part.

The grains stored in the grain tank 7 are conveyed by the screw conveyor inside the discharging auger 9, and are discharged from the discharging port 9a. The grains discharged from the discharging port 9a are put into a truck bed, a container, or the like. When discharging the grains, the discharging auger 9 moves the discharging port 9a to the outside of the machine body by rotating, in the left-right direction or the up-down direction of the machine body, from the retracted state.

A waste straw disposing part 10 that disposes of waste straw after threshing carried out by the threshing part 6 is provided behind the threshing part 6 on the traveling machine body 4. The waste straw disposing part 10 has a waste straw conveying device 10a and a waste straw cutting device 10b. The waste straw conveying device 10a conveys the threshed grain culms (waste culms) that have been threshed by the threshing part 6 rearward and either discharges same to the outside of the machine body or conveys same to the waste straw cutting device 10b.

The waste straw cutting device 10b cuts the waste culms conveyed from the waste straw conveying device 10a and discharges same to the outside of the machine body.

The driving part 12 covered with the cabin 30 is provided on the traveling machine body 4, on the right of the reaping part 5 and in front of the grain tank 7. In other words, the driving part 12 is provided inside the cabin 30 above a front part of the traveling machine body 4. A handle 13 as a steering operation part is provided in a front part of the driving part 12, and a driver's seat 14 is provided behind the handle 13. In addition, various operation tools and the like, including a main speed change lever 15, are disposed on the left side of the driver's seat 14.

A prime mover part including the engine 11 is provided below the rear of the driving part 12. Power from the engine 11 is transmitted to each of the various devices of the parts included in the combine harvester 1 via a speed change gear or the like.

The engine 11 is a diesel engine.

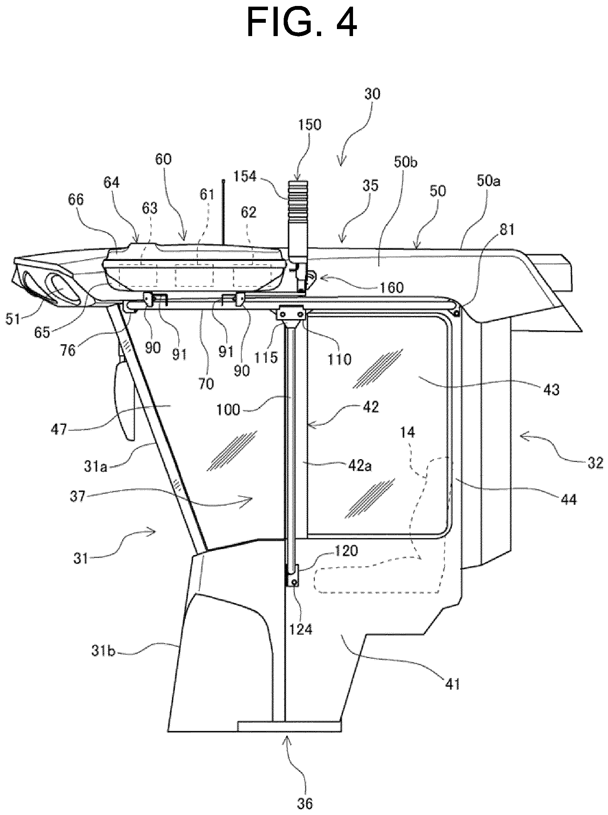

A configuration of the cabin 30 will be described with reference to Fig. 4 to Fig. 6. The cabin 30 has a front face part 31, a rear face part 32, a left side wall part 33, a right side wall part 34, a roof part 35 that forms a ceiling, and a floor part 36, and these parts form a substantially box shape as a whole.

The front face part 31 of the cabin 30 has a front upper face part 31a in a forward-inclined shape and a front lower face part 31b in a forwardly descending inclined shape, where the front upper face part 31a constitutes an upper major part of the front face part 31, the front lower face part 31b constitutes the approximate lower half part of the front face part 31, and the front face part 31 as a whole has a bent shape that is concave to the rear side in the side view. The front upper face part 31a is formed, as an entirely transparent window part, from a rectangular transparent plate made of glass, acrylic resin or polycarbonate resin, or the like. The front lower face part 31b is composed of a metal member such as a steel plate or other metal member.

A lower part of the left side wall part 33 of the cabin 30 is a lower side face part 41 that is a metal plate part composed of a steel plate or the like (see Fig. 4). A left pillar part 42, which is straight along the up-down direction, is provided in the left side wall part 33 in an intermediate part of the front-rear direction.

The left pillar part 42 is provided in an upper part of the left side wall part 33 over the approximately entire up-down direction. The left pillar part 42 is a column part that is rectangular in a planar cross-sectional view and has a left side face 42a which is vertically flat. The left pillar part 42 is provided so that the left side face 42a protrudes slightly to the left relative to the other parts in the left side wall part 33.

In the left side wall part 33, above the lower side face part 41 and behind the left pillar part 42, a rectangular-shaped left rear window part 43 is provided. The left rear window part 43 is composed by mounting a transparent plate such as rectangular glass to a frame-shaped part formed, together with the left pillar part 42, by the upper part of the left side plate 44 that forms the rear part of the left pillar part 42 in the left side wall part 33. The lower part of the left side plate 44 forms the lower side face part 41.

In the left side wall part 33, a part forward of the left rear window part 43 forms a left front window part 47. The left front window part 47 has an approximately inverted trapezoidal shape, a front side edge part of the left front window part 47 is disposed along the forward inclination of the front upper face part 31a of the front face part 31, and a rear side edge part of the left front window part 47 is disposed along the upper part of the left pillar part 42. The left front window part 47 is formed from a rectangular transparent plate made of glass, acrylic resin or polycarbonate resin, or the like, and is provided in the approximately same range as the front upper face part 31a of the front face part 31 in the up-down direction.

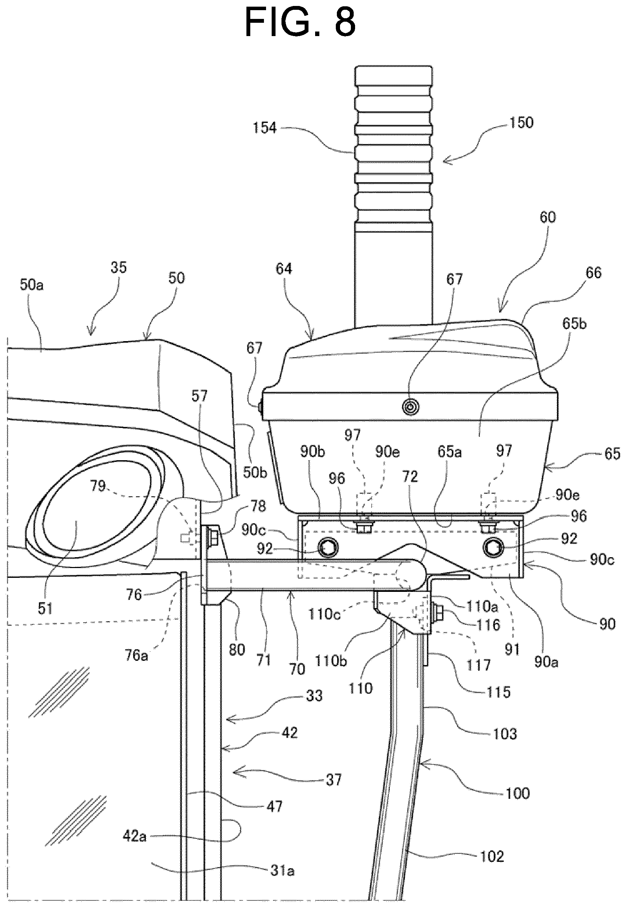

In the left side wall part 33, a front upper side plate 57 is provided above the left front window part 47 (see Fig. 8). The front upper side plate 57 forms an upper edge part of a part of the left side wall part 33 anterior to the left pillar part 42. A lower edge part of the front upper side plate 57 overlaps, from the inside (right side), the upper edge part of the left front window part 47.

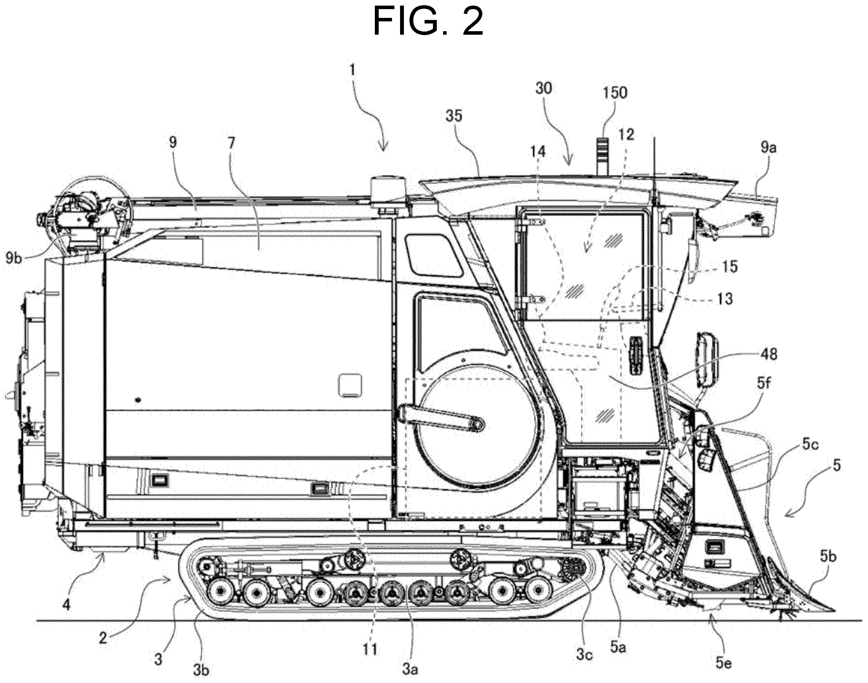

The right side wall part 34 of the cabin 30 is provided with a door 48, which is an open/close door for getting in and out (see Fig. 2). The door 48 is rotatably supported against a frame part of the cabin 30 in a manner that the door 48 opens outward from the front side.

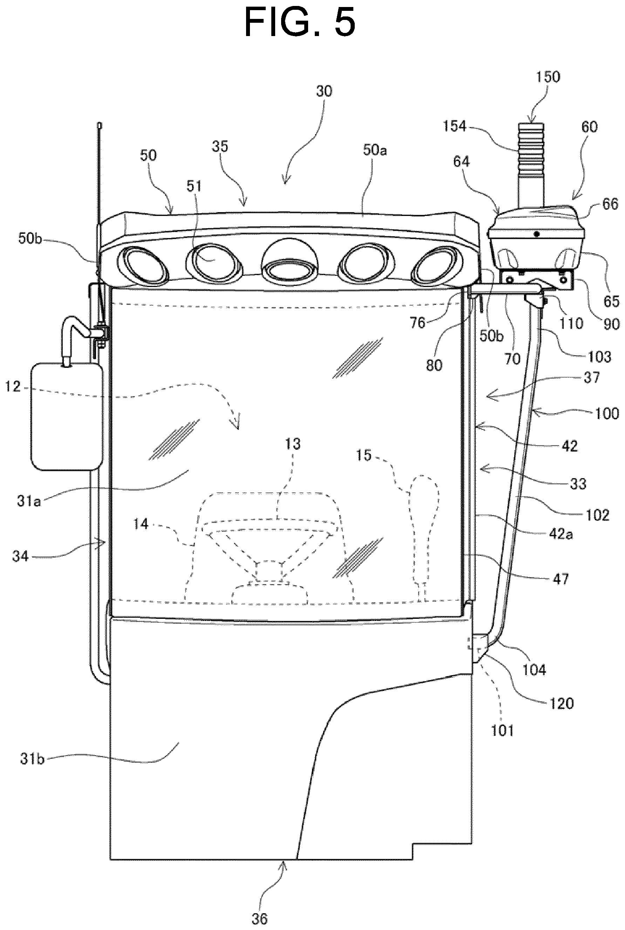

The roof part 35 of the cabin 30 has an approximately rectangular outer shape with a longitudinal direction as the front-rear direction in the plan view. The roof part 35 has a front side edge end part projecting forward in an eave shape with respect to an upper end part of the front face part 31, and a rear side edge end part projecting rearward in an eave shape with respect to the upper end part of the rear face part 32. A plurality of lighting parts 51 is provided side by side on the front end face part of the roof part 35 (see Fig. 5).

The roof part 35 is formed to have a flattened outer shape and be hollow. The roof part 35 has a lower side panel (not shown) that forms a base part of the roof part 35, and a roof panel 50 provided above the lower side panel, and these panels form a hollow part. The roof panel 50 has an upper face part 50a and left and right side face parts 50b that are formed so as to bend downwardly on both the left and right sides of the upper face part 50a. The roof panel 50 is a covering member that is provided to cover the lower side panel part entirely from above and from both the left and right sides.

In addition, the left side face part 50b of the roof panel 50 covers the upper edge part of the left side wall part 33 from the left, and the right side face part 50b of the roof panel 50 covers the upper edge part of the right side wall part 34 from the right. The interior of the roof part 35 is provided with an indoor unit of an air-conditioning device, and the like included in the combine harvester 1.

In the cabin 30 with the above configuration, the left side face part of the cabin 30 is formed by the left side wall part 33 and a left-hand part of the roof part 35. In addition, the right side face part of the cabin 30 is formed by the right side wall part 34 and a right-hand part of the roof part 35. In the following, the left side face part including the left side wall part 33 and the left-hand part of the roof part 35 in the cabin 30 is referred to as a cabin left side face part 37.

The combine harvester 1 according to the present embodiment includes an antenna unit 60 for receiving positional information from a satellite. The antenna unit 60 is provided in an upper part of the cabin left side face part 37 out of the left and right side face parts of the cabin 30. The antenna unit 60 is provided in a state of being supported with respect to the cabin 30 via a predetermined support member so that the antenna unit 60 is positioned near the left of the upper part of the cabin left side face part 37.

The antenna unit 60 has a box-like outer shape that is approximately rectangular in the plan view and is provided in an orientation where the longitudinal direction is the front-rear direction. The antenna unit 60 is provided at approximately the same height as the roof part 35 in terms of the up-down direction. Specifically, the antenna unit 60 is provided so that the dimension thereof in the up-down direction is approximately the same as the dimension in the up-down direction of the side face parts 50b of the roof panel 50, and that the substantially whole part of the antenna unit 60 in the up-down direction is positioned in the height range of the side face parts 50b of the roof panel 50 in terms of the up-down direction.

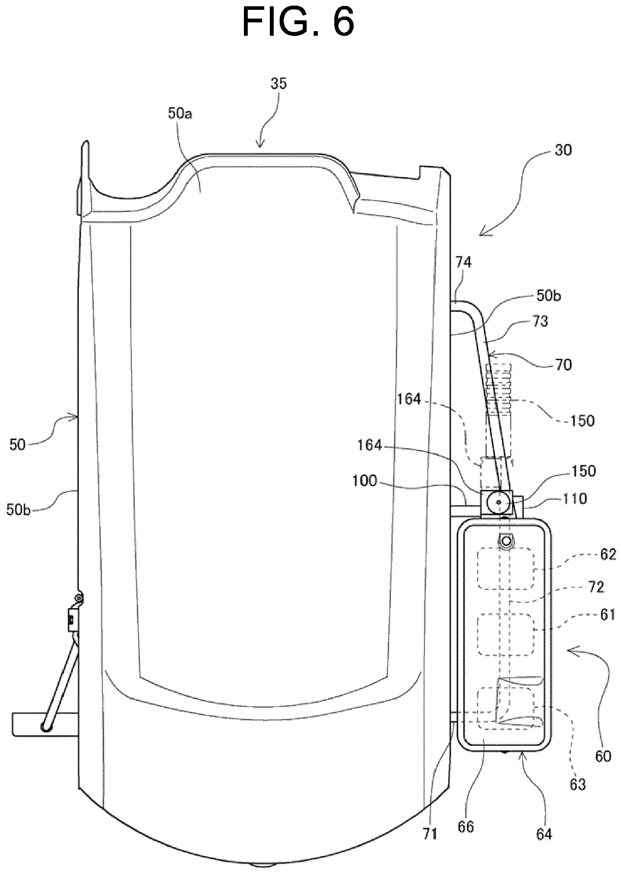

In the front-rear direction, the whole or substantially whole of the antenna unit 60 is positioned anterior to the left pillar part 42 provided on the cabin left side face part 37. Specifically, the antenna unit 60 is positioned with the rear end part thereof located near the upper end part of the left pillar part 42 in the front-rear direction, and is provided along the upper edge part of the left front window part 47 in the left side view. The antenna unit 60 has approximately the same length as the upper edge part of the left front window part 47 in the front-rear direction. The antenna unit 60 has an approximate dimension of 1/3 of the overall length of the roof part 35 in the front-rear direction, and is provided at a position on the left front side with respect to the roof part 35 (see Fig. 6).

In the left-right direction, the antenna unit 60 is provided so that the right side face part of the antenna unit 60 is positioned directly to the left of the left side face part 50b of the roof panel 50. Thus, the antenna unit 60 is arranged adjacent to the left of the front part of the roof part 35 with respect to the cabin 30.

According to this arrangement configuration of the antenna unit 60, in a configuration in which the cabin 30 is provided in the right front part of the machine body of the combine harvester 1, the antenna unit 60 is positioned in approximately the center part of the machine body in the left-right direction (see Fig. 3). In addition, since the antenna unit 60 is positioned in the front left of the roof part 35, light distribution from the lighting parts 51 and a view from inside the cabin 30 is not obstructed by the antenna unit 60. In addition, a space is formed on the left side of the cabin 30 between the discharging auger 9 in the retracted state and the cabin 30, and the antenna unit 60 is arranged in the space.

The antenna unit 60 is configured as a positioning unit for receiving radio waves from a positioning satellite and measuring the position of the combine harvester 1. The antenna unit 60 comprises a receiving device 61 as a receiving part, an inertial navigation device 62 as an arithmetic part, a wireless communication device 63 as a communication part, and a case 64 that houses these devices. An automatic steering system of the combine harvester 1 is constituted by the antenna unit 60.

The receiving device 61 receives radio waves from a positioning satellite, converts the received radio waves into signals, and transmits the signals to the inertial navigation device 62. The receiving device 61 is, for example, a GNSS receiver (GNSS antenna) that receives radio waves from a group of GNSS satellites or a Global Positioning System (GPS) receiver (GPS antenna) that receives radio waves from GPS satellites, and so on.

The inertial navigation device 62 measures triaxial gyros and acceleration in three directions to calculate posture orientation data. In addition, the inertial navigation device 62 calculates positional data on the basis of signals transmitted from the receiving device 61. The inertial navigation device 62 functions as an arithmetic device that calculates positional data on the basis of positional information from the receiving device 61. For example, when the inertial navigation device 62 is equipped with a GNSS receiver, reliability of the posture orientation data calculated by the inertial navigation device 62 is improved.

The antenna unit 60 provided with the inertial navigation device 62 makes it possible to use inertial navigation to calculate and determine the speed and distance of movement on the basis of the acceleration in three directions detected by the inertial navigation device 62, even in situations where radio waves from positioning satellites cannot be received due to bad weather, radio wave interference, and the like.

The wireless communication device 63 transmits positional data and posture orientation data calculated by the inertial navigation device 62 to the outside via wireless communication. The wireless communication device 63 is a data communication device using, for example, wireless local area network (LAN) or mobile communication. The data transmitted from the wireless communication device 63 is received by, for example, a portable terminal owned by an operator or an Electronic Control Unit (ECU) of the combine harvester 1, and is used to check the position of the combine harvester 1 in a field, check the posture of the combine harvester 1 (e.g., forward/rearward/left/right inclination), and so on.

The case 64 has a lower case body 65 that forms the lower part of the case 64, and an upper case body 66 that forms the upper part of the case 64, and these case bodies form a housing space and an outer shape of the antenna unit 60. The case 64 has a relatively flat box-like outer shape with the front-rear direction as the longitudinal direction, the outer shape formed by the lower case body 65 and the upper case body 66. The lower case body 65 and the upper case body 66 are members made of resin, for example.

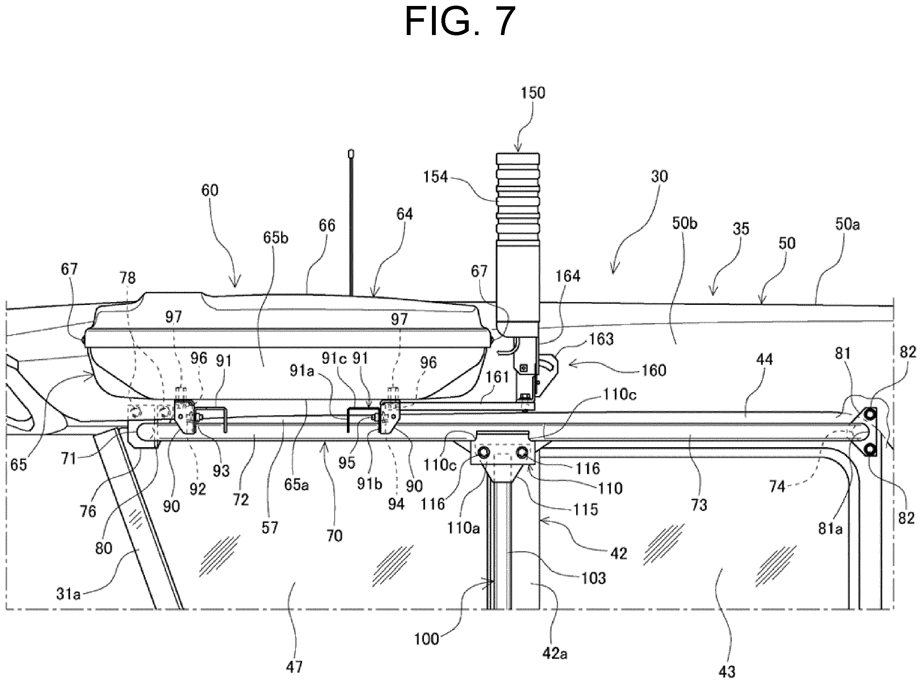

The lower case body 65 is a box-shaped member with the upper side open, and has a horizontal bottom face part 65a and a peripheral wall part 65b including front, rear, right, and left side face parts, with the upper edge parts thereof forming a rectangular opening part (see Fig. 7). The upper case body 66 is a lid-like part that covers the opening part of the lower case body 65 from the upper side. The upper case body 66 has a rectangular edge part formed by the front, rear, right, and left face parts, and is provided in a state where this edge part is fitted to the rectangular opening part of the lower case body 65. The upper case body 66 is fitted to the lower case body 65 with the lower side opening edge part overlapping the upper side opening edge part of the lower case body 65 from the outside. Both case bodies are fixed to each other at multiple locations by fixtures 67 (see Fig. 7) such as bolts that penetrate through each fitting part.

In the case 64, from front to rear, the wireless communication device 63, the receiving device 61, and the inertial navigation device 62 are arranged in this order, with these devices spaced at predetermined intervals. These devices are provided in the case 64, in a state of being fixed by fixtures such as bolts to a mounting plate (not shown) that is provided on the upper side of the bottom face part 65a of the lower case body 65.

As described above, the antenna unit 60 is constituted of the receiving device 61, the inertial navigation device 62 and the wireless communication device 63 housed in the case 64 as an integrated unit.

The positioning data (positional data and posture orientation data) acquired by the antenna unit 60 is used to control the autonomous combine harvester 1, which works while traveling autonomously along a predetermined route. The positional data are used, for example, to determine whether the combine harvester 1 is traveling along a predetermined route. In addition, the posture orientation data are used to check the driving condition of the combine harvester 1 and the condition of the field, for example, by recognizing the inclination of the combine harvester 1.

The operator can also send a real-time instruction to the combine harvester 1 by receiving transmitted data from the wireless communication device 63.

The configuration of the antenna unit 60 is not limited to the present embodiment. As a configuration of the antenna unit 60, for example, the antenna unit 60 may be configured to have a receiving device 61 functioning as an arithmetic part that calculates positional data from positional information received by the receiving device 61, allowing the inertial navigation device 62 to be omitted.

The support configuration of the antenna unit 60 will be described with reference to Fig. 4 to Fig. 9. In Fig. 7 and Fig. 8, a part of the roof panel 50 is illustrated in a cutout state.

The combine harvester 1 has a support frame 70 as an antenna support member for supporting the antenna unit 60. The support frame 70 is a frame part composed of a metal round pipe-shaped member having a predetermined bent or curved shape, and is provided on the cabin left side face part 37.

The support frame 70 is configured to extend rear and forth. The support frame 70 has a frame body part extending in an approximately front-rear direction, the frame body part formed from the major part of the support frame 70 except for a front end part and a rear end part thereof. The support frame 70 has, in the order from front to rear, a front fixing part 71, a front-rear extension part 72, an inclination part 73, and a rear fixing part 74 as a bent-shaped part made of a pipe-shaped member.

The front fixing part 71 is a part with the left-right direction as an axis direction, and a part extending from the cabin left side face part 37 toward the left. The right side end part of the front fixing part 71 is the front side end part of the support frame 70.

The front-rear extension part 72 is a part with the front-rear direction as an axis direction, and a part horizontally extending from the left end part of the front fixing part 71 toward the rear to form a right-angled corner part together with the front fixing part 71. The corner part between the front-rear extension part 72 and the front fixing part 71 is a curved part.

The inclination part 73 is a part with an axis direction that is inclined from the outer side (left side) in the left-right direction toward the inner side (right side) in the left-right direction gradually from the front side to the rear side in the plan view. The inclination part 73 is a part that extends toward obliquely the right rear from the rear end part of the front-rear extension part 72 to form an obtuse corner part together with the front-rear extension part 72 in the plan view. In the plan view, the angle formed by the inclination part 73 and the front-rear extension part 72 is, for example, about 170°.

The rear fixing part 74 is a part with the left-right direction as an axis direction, and a part extending horizontally toward the right from the rear end part of the inclination part 73 to form an obtuse corner part together with the inclination part 73. In the plan view, the angle formed by the inclination part 73 and the rear fixing part 74 is, for example, about 100°. The corner part between the inclination part 73 and the rear fixing part 74 is a curved part. The right side end part of the rear fixing part 74 is the rear side end part of the support frame 70.

In the support frame 70, the front-rear extension part 72 and the inclination part 73 form the frame body part extending in the approximately front-rear direction. In the left side view, the support frame 70 is positioned below and near the lower edge part of the left side face part 50b of the roof panel 50, and is provided along the left side face part 50b of the roof panel 50.

The support frame 70 is provided in a state where a front end part and a rear end part thereof are fixed to the cabin left side face part 37. That is, the support frame 70 is provided in a state where the right side end part of the front fixing part 71, which serves as the front end part, and the right side end part of the rear fixing part 74, which serves as the rear end part, are each fixed to the cabin left side face part 37.

The front side end part of the support frame 70 is positioned, in the cabin left side face part 37, near the upper end part of the front upper face part 31a that constitutes the front face part 31. The front side end part of the support frame 70 is fixed to a front upper side plate 57, which constitutes the front upper part of the cabin left side face part 37, via a front mounting plate 76.

The front mounting plate 76 is a plate-shaped member having an approximately rectangular outer shape, and is fixed to the front upper side plate 57 by fixing bolts 78 at two, front and rear, locations with the plate thickness direction as the left-right direction. The fixing bolts 78 penetrate the front mounting plate 76 and the front upper side plate 57, and are screwed and inserted into nut parts 79 (see Fig. 8) provided on the rear (right) side of the front upper side plate 57. An upper part of the front mounting plate 76 is fixed to the front upper side plate 57 by the fixing bolts 78, and a lower part of the front mounting plate 76 extends downward from the front upper side plate 57.

The lower part of the front mounting plate 76 is positioned near the left and right outer sides (left side) relative to the front upper side corner part of the left front window part 47. The right end part of the front fixing part 71 of the support frame 70 is fixed to the lower part of the front mounting plate 76. The right end part of the front fixing part 71 is fixed to the front mounting plate 76 by welding or the like, while fitting into a circular opening part 76a (see Fig. 8) formed in the lower part of the front mounting plate 76.

A reinforcement plate 80 is provided between the front mounting plate 76 and the support frame 70. The reinforcement plate 80 is a plate-shaped member having approximately the same dimensions as the front mounting plate 76 in the up-down direction, and is provided on the rear side of the front fixing part 71 in an orientation with the front-rear direction as the plate thickness direction. The reinforcement plate 80 is provided so that the reinforcement plate 80 projects vertically to the left with respect to the front mounting plate 76 at a position in an intermediate part of the front mounting plate 76 in the front-rear direction. The reinforcement plate 80 is fixed to the front mounting plate 76 by welding or the like, and is also fixed to the right end part of the front fixing part 71 by welding or the like.

The front fixing part 71 of the support frame 70 is fixed to a part extending downward from the left side face part 50b of the roof panel 50 among the front mounting plate 76 in the left side view. A part of the front mounting plate 76 fixed by the fixing bolts 78 to the front upper side plate 57 is covered from the left with the left side face part 50b of the roof panel 50.

The rear side end part of the support frame 70 is positioned in the vicinity of the upper rear corner part of the left rear window part 43 in the cabin left side face part 37. The rear side end part of the support frame 70 is fixed to the upper end part of the left side plate 44, which constitutes the rear part of the cabin left side face part 37, via a rear mounting plate 81 (see Fig. 7).

The rear mounting plate 81 is a plate-shaped member having an approximately truncated isosceles triangular outer shape, and is fixed to the left side plate 44 with the plate thickness direction as the left-right direction and the top part side as the front side. The rear mounting plate 81 is fixed to the left side plate 44 by fixing bolts 82 at two, front and rear, locations. The fixing bolts 82 penetrate the left side plate 44 and are screwed and inserted into female screw parts (not shown) provided on the rear side (right side) of the left side plate 44.

The right end part of the rear fixing part 74 of the support frame 70 is fixed to the rear mounting plate 81. The right end part of the rear fixing part 74 is fixed to the rear mounting plate 81 by welding or the like in a state of being fitted into a circular opening part 81a formed in a lower part of the rear mounting plate 81.

The rear fixing part 74 of the support frame 70 is fixed to a part extending downward from the left side face part 50b of the roof panel 50 in the left side view, among the rear mounting plate 81. An upper part of the part of the rear mounting plate 81 fixed to the left side plate 44 by the fixing bolts 82 is covered from the left by the left side face part 50b of the roof panel 50.

With respect to the support frame 70 supportively fixed to the cabin 30 as described above, the antenna unit 60 is supported above the front part of the support frame 70. The antenna unit 60 is supported in a state where the antenna unit 60 is fixed to support brackets 90, which are provided at two, front and rear, locations in the front-rear extension part 72 of the support frame 70. The support bracket 90 on the front side is provided near the corner part formed by the front fixing part 71 and the front-rear extension part 72 with respect to the support frame 70, and the support bracket 90 on the rear side is provided in a front-rear intermediate part of the front-rear extension part 72.

Each of the support brackets 90 is fixed to a mounting bracket 91 that is fixedly provided to the support frame 70. That is, the support bracket 90 is provided to the support frame 70 via the mounting bracket 91. The support bracket 90 and the mounting bracket 91 are configured to be laterally symmetrical or substantially laterally symmetrical with the axis center position of the front-rear extension part 72 of the support frame 70 as a center. In addition, the respective pairs of the front and rear support brackets 90 and mounting brackets 91 are configured to be symmetrical or substantially symmetrical with respect to the front-rear direction.

The mounting bracket 91 is a longitudinal member in the form of a bent plate-shaped member, and is provided on the upper side of the front-rear extension part 72, with the longitudinal direction as the left-right direction orthogonal to the axis direction of the front-rear extension part 72 in the plan view. The mounting bracket 91 has a front face part 91a and rear face part 91b, which are parallel to each other, and an upper face part 91c, and these face parts form an approximately "U" shape with the lower side as an open side in the side view.

On the lower sides of the front face part 91a and the rear face part 91b of the mounting bracket 91, semicircular notched parts for fitting the front-rear extension part 72 are formed in the respective left-right central parts. The mounting bracket 91 is fixed to the front-rear extension part 72 by welding or the like, in a state where the front-rear extension part 72 is fitted into the notched parts of the front face part 91a and the rear face part 91b. With respect to the longitudinal direction, the mounting bracket 91 has a dimension that is shorter than the dimension of the case 64 of the antenna unit 60 in the width direction (left-right direction), and is provided within a range of the outer shape of the antenna unit 60 in the plan view.

The support bracket 90 is a longitudinal member in the form of a bent plate-shaped member, and is provided at the upper side of the front-rear extension part 72, with the longitudinal direction as the left-right direction orthogonal to the axis direction of the front-rear extension part 72 in the plan view. The support bracket 90 has approximately the same length as the mounting bracket 91.

The support bracket 90 has a fixing face part 90a with the front-rear direction as the plate thickness direction, a support face part 90b in a horizontal shape bent at right angle from the upper end of the fixing face part 90a, and left and right side face parts 90c having a shape bent at right angle from the left end or the right end of the fixing face part 90a. In the support bracket 90, the support face part 90b is a face part to which the case 64 of the antenna unit 60 is mounted. The support face part 90b is positioned at approximately the same height as the upper face part 91c of the mounting bracket 91.

The support bracket 90 on the front side is positioned on the front side of the mounting bracket 91 with the fixing face part 90a on the rear side, and is fixed to the mounting bracket 91 at two locations of both the left and right ends by fixing bolts 92, in a state where the fixing face part 90a overlaps the front face part 91a of the mounting bracket 91. The fixing bolts 92 penetrate the fixing face part 90a and the front face part 91a, and are screwed and inserted into nut parts 93 provided on the rear side of the front face part 91a of the mounting bracket 91.

The support bracket 90 on the rear side is positioned on the rear side of the mounting bracket 91 with the fixing face part 90a on the front side, and is fixed to the mounting bracket 91 at two locations of both the left and right ends by fixing bolts 94, in a state where the fixing face part 90a overlaps the rear face part 91b of the mounting bracket 91. The fixing bolts 94 penetrate the fixing face part 90a and the rear face part 91b, and are screwed and inserted into nut parts 95 provided on the front side of the rear face part 91b of the mounting bracket 91.

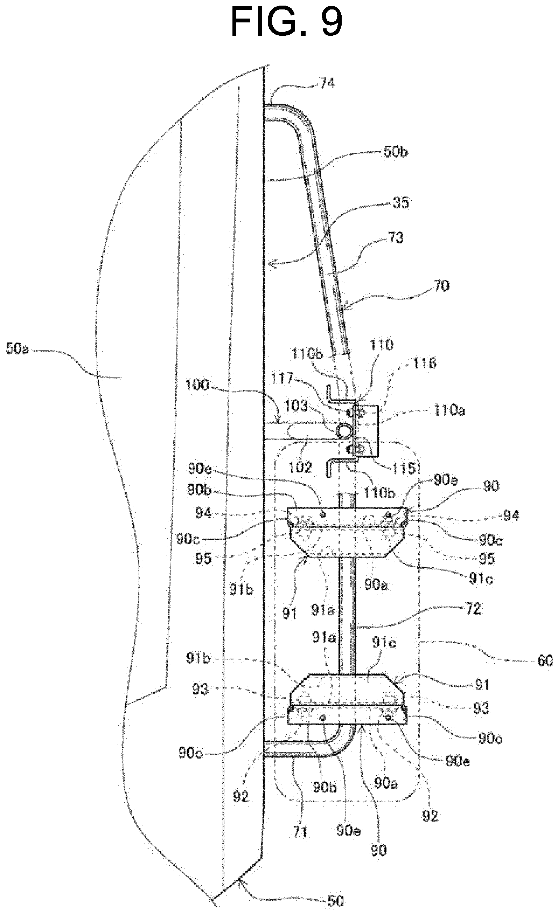

Against these front and rear support brackets 90, the case 64 of the antenna unit 60 is fixed to the support face part 90b by fixing bolts 96. A part fixed by the fixing bolts 96 is provided at two locations of both the left and right sides in each support bracket 90. For this reason, in the support face part 90b of the support bracket 90, holes 90e through which the fixing bolts 96 penetrate are formed at two locations of both the left and right sides (see Fig. 9). Thus, the antenna unit 60 is fixed to the front and rear support brackets 90 at a total of four locations, two at each support bracket, by the fixing bolts 96. Each of the fixing bolts 96 penetrates, from the bottom side, the support face part 90b of the support bracket 90, and screwed and inserted into a female screw part 97 composed of a cylindrical member provided so as to face the bottom face part 65a of the lower case body 65 inside the case 64 and to open a screw hole.

The antenna unit 60 is provided in a state where the antenna unit 60 is supported on the upper side of the approximate front half part of the support frame 70. Specifically, the antenna unit 60 is provided with respect to the support frame 70 in a position where, in the plan view, the left-right center of the outer shape of the case 64 coincides or approximately coincides with the axial center position of the front-rear extension part 72. In addition, in the antenna unit 60, a front end part of the case 64 is positioned forward of the front fixing part 71, and a rear end part of the case 64 is positioned forward of a bent part formed by the front-rear extension part 72 and the inclination part 73, with respect to the front-rear direction.

A handrail part 100 is provided to the configuration described above, in which the antenna unit 60 is supported by the support frame 70 in a left upper part of the cabin 30. The handrail part 100 is used to carry out, for example, work on the antenna unit 60. The handrail part 100 is composed of a metal round pipe-shaped member having a predetermined bent or curved shape, and is provided on the cabin left side face part 37 of the cabin 30.

The handrail part 100 is configured to extend up and down. The handrail part 100 has a handrail body part extending in the up-down direction in the side view, the handrail body part formed from the major part of the handrail part 100 except for an upper end part and a lower end part thereof. The handrail part 100 has, in order from the bottom side to the upper side, a lower fixing part 101, an inclined extension part 102, and an upper fixing part 103, as a bent-shaped part made of a pipe-shaped member.

The lower fixing part 101 is a part with the left-right direction as an axis direction, and a part extending from the cabin left side face part 37 toward the left. A right side end part of the lower fixing part 101 forms a lower side end part of the handrail part 100.

The inclined extension part 102 is a part with an axis direction that is along the up-down direction in the side view and inclined from the left-right inner side (right side) toward the left-right outer side (left side) gradually from the bottom side to the upper side in a front view. The inclined extension part 102 is a part that extends obliquely upward to the left to form an obtuse corner part together with the lower fixing part 101 in the front view. The corner part between the inclined extension part 102 and the lower fixing part 101 is a curved part 104.

The upper fixing part 103 is a part with the up-down direction as an axis direction, and a part extending upward from an upper end part of the inclined extension part 102 to form an obtuse corner part together with the inclined extension part 102. An upper end part of the upper fixing part 103 forms an upper side end part of the handrail part 100.

In the handrail part 100, the inclined extension part 102 and the upper fixing part 103 form the handrail body part that extends in the up-down direction in the side view. The inclined extension part 102, which forms the majority of the handrail body part, is a part of the handrail part 100 that is primarily grasped by a worker. The handrail part 100 is provided in a position in which a large part of the handrail part 100 overlaps the left pillar part 42 that constitutes the cabin left side face part 37 in the left side view.

The handrail part 100 is provided in a state where the upper end part of the handrail part 100 is connected to the support frame 70 and the lower end part of the handrail part 100 is fixed to the cabin left side face part 37. That is, the handrail part 100 is provided in a state where the upper end part of the upper fixing part 103 is supportively connected to the support frame 70, and the right side end part of the lower fixing part 101 is fixed to the cabin left side face part 37.

The upper end part of the handrail part 100 is connected to the support frame 70 via an upper support bracket 110 that is an upper side connecting member fixedly provided to the support frame 70. The upper support bracket 110 is provided below the support frame 70 to a part of the support frame 70 between the rear side support bracket 90 and the corner part formed by the front-rear extension part 72 and the inclination part 73.

The upper support bracket 110 is a member in a form of a plate-shaped member bent and formed into a predetermined shape. The upper support bracket 110 has an approximately rectangular fixing face part 110a with the left-right direction as the plate thickness direction, and front and rear side face parts 110b bent at a right angle from the front and rear end parts of the fixing face part 110a toward the left-right inner side (right side), and these face parts form an approximately "U" shape with the right side as an open side in a top view. In the upper support bracket 110, the fixing face part 110a is a face part to which the upper end part of the handrail part 100 is mounted.

On the left side of an upper part of each of the front and rear side face parts 110b of the upper support bracket 110, a concave notched part 110c into which the front-rear extension part 72 of the support frame 70 is fitted is formed (see Fig. 8). The upper support bracket 110 is fixed to the front-rear extension part 72 by welding or the like, in a state where the front-rear extension part 72 is positioned in the notched parts 110c of the front and rear side face parts 110b. In the upper support bracket 110, an upper edge part of the fixing face part 110a is positioned on the left of the front-rear extension part 72.

In the handrail part 100, the upper end part of the upper fixing part 103 is fixed to the upper support bracket 110 via a fixing plate 115. The fixing plate 115 is a plate-shaped member having an approximately truncated isosceles triangular outer shape, and is provided with the plate thickness direction as the left-right direction in an orientation with the top part side as the lower side. The fixing plate 115 is fixed to the left side of the upper end part of the upper fixing part 103 by welding or the like.

The fixing plate 115 is fixed to the fixing face part 110a at two, front and rear, locations by fixing bolts 116, in a state where the fixing plate 115 overlaps the fixing face part 110a of the upper support bracket 110 from the rear side (right side). The fixing bolts 116 penetrate the fixing face part 110a and the fixing plate 115 and are screwed and inserted into nut parts 117 provided on the rear side (right side) of the fixing plate 115. Parts fixed by the fixing bolts 116 are positioned near the front and rear corner parts of the upper part of the fixing plate 115.

The lower end part of the handrail part 100 is fixed to the lower side face part 41, which constitutes the cabin left side face part 37, via a lower support bracket 120, which is a mounting member. The lower support bracket 120 is a mounting fitting that has an approximately "L" shaped bent shape in the plan view. The lower support bracket 120 is fixed to the lower side face part 41 by a fixing bolt 124 in a state where one face part having an approximately "L" shape as a fixing face part is disposed along the lower side face part 41. A support face part, which is the other face part having an approximately "L" shape of the lower support bracket 120 protrudes from the front side of a fixing face part 121 toward the left. With respect to the lower support bracket 120, the handrail part 100 is fixed to the lower support bracket 120 by welding or the like, in a state where the lower fixing part 101 and a part of the curved part 104 are positioned on the rear side of the support face part.

As described above, the upper end side of the handrail part 100 is supportively connected to the support frame 70, and the lower end side of the handrail part 100 is supportively connected to the cabin left side face part 37, and thus the handrail part 100 is provided in a state of being bridged between the support frame 70 and the cabin left side face part 37.

The combine harvester 1 according to the present embodiment includes a laminated lamp 150 as a state indication device for providing an indication used for notification of various states of the machine body of the combine harvester 1. The laminated lamp 150 is provided to the cabin left side face part 37 in a position immediately behind the antenna unit 60.

The laminated lamp 150 has a cylindrical outer shape and is provided in a standing state with the central axis direction as the up-down direction. The laminated lamp 150 has, as face parts forming the cylindrical outer shape, a cylindrical outer peripheral face part 151, and a bottom face part 152 and an upper face part 153 which are both flat face parts.

An approximate upper half part of the laminated lamp 150 forms a light emitting indication part 154 in which a plurality of indication lamp parts is laminated. The light emitting indication part 154 has a structure in which a first indication lamp part 154a providing a red light-emitting indication, a second indication lamp part 154b providing a yellow light-emitting indication, and a third indication lamp part 154c providing a green light-emitting indication, as the plurality of indication lamp parts, are laminated in sequence from top to bottom. Each indication lamp part is configured to include a light source such as an LED.

The configuration of the laminated lamp 150, for example, the lamination order of the indication lamp parts providing the light-emitting indications of respective colors, the types of colors of light emitted from the respective indication lamp parts, the number of laminated indication lamp parts, the structure for providing the light-emitting indications, and the like are not limited. An indication modes for the laminated lamp 150 is also not limited. Examples of the indication mode for the laminated lamp 150 may include a mode in which all indication lamp parts are turned off, a mode in which the plurality of indication lamp parts is simultaneously turned on, and a mode in which a blinking indication of the indication lamp parts is employed.

The laminated lamp 150 is connected, via a connection cord 155, which is a connecting wire extending from the bottom face part 152, to a controller (not shown) configuring a controlling part included in the combine harvester 1, and an indication operation of the laminated lamp 150 is controlled by the controller. The controller has a configuration in which various functional parts such as a central processing unit (CPU) executing various types of arithmetic processing, a read only memory (ROM) as a storage part, a random access memory (RAM), and an input/output interface are connected via a bus or the like. The CPU performs arithmetic processing according to various programs stored in the ROM and the like.

The controller causes, on the basis of a signal input from various sensors, switches, and the like arranged in the parts of the combine harvester 1 or the operation mode or the like of the antenna unit 60, any of the indication lamp parts of the light emitting indication part 154 of the laminated lamp 150 to emit light to provide notification of various states of the machine body of the combine harvester 1. The content of the notification provided by the laminated lamp 150 is not particularly limited.

The red light-emitting indication from the first indication lamp part 154a is used as an indication of attention or alert when some sort of trouble occurs in the combine harvester 1, for example. Specifically, when grain culms cause clogging in the threshing part 6, the amount of grains in the grain tank 7 reaches full, or an abnormality in cooling water temperature for the engine 11 is caused, for example, notification is provided by lighting of the first indication lamp part 154a. In addition, the yellow light-emitting indication from the second indication lamp part 154b is used as a preliminary alert indication in a preliminary stage of occurrence of any of the troubles described above, or a notification indication of detection of an obstacle in the way of autonomous traveling of the machine body, for example. In addition, the green light-emitting indication from the third indication lamp part 154c is used to provide notification of a state in which the combine harvester 1 is ready to start work, a state in which the combine harvester 1 normally works, for example.

The laminated lamp 150 may be used to provide notification according to a reception state of the receiving device 61 of the antenna unit 60 as the state of the machine body of the combine harvester 1. In this case, the laminated lamp 150 is controlled such that, the third indication lamp part 154c emitting green light is turned on when the radio wave reception state of the antenna unit 60 is an adequate reception mode, the second indication lamp part 154b emitting yellow light is turned on when the radio wave reception state of the antenna unit 60 is an unstable reception state, and the first indication lamp part 154a emitting red light is turned on when the radio wave reception state of the antenna unit 60 is a reception disabled state, for example.

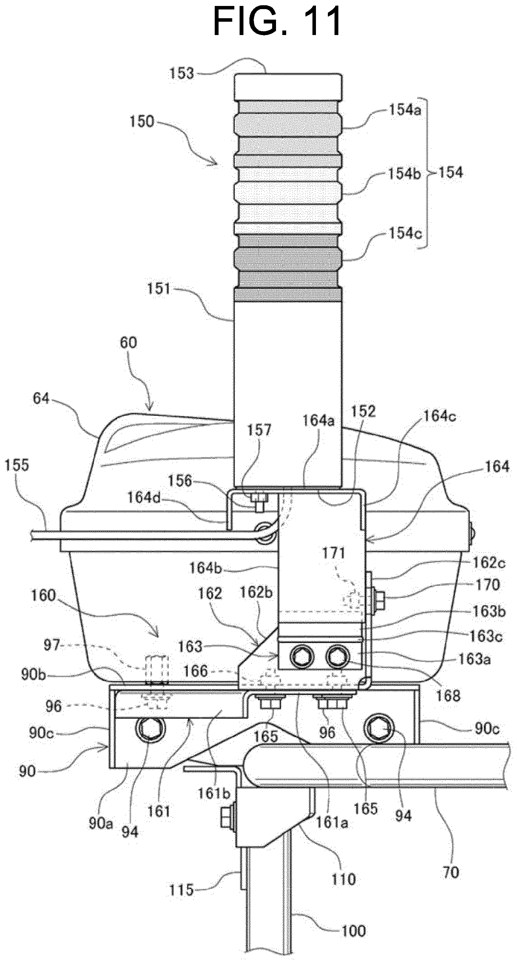

An arrangement and a support configuration of the laminated lamp 150 in the combine harvester 1 in the configuration provided with the laminated lamp 150 described above will be described with reference to Fig. 3 and Fig. 4 to Fig. 13.

The laminated lamp 150 is provided so as to grasp the indication mode provided by the light emitting indication part 154 from all directions around the combine harvester 1, that is, from any position within the range of 360 degrees, in order to provide notification of the state of the combine harvester 1 through the indication of the laminated lamp 150. In this regard, the laminated lamp 150 is provided such that at least the whole of the light emitting indication part 154 is positioned above the upper face part 50a of the roof panel 50 of the cabin 30 in the up-down direction.

The laminated lamp 150 is provided in a state where the laminated lamp 150 is supported by a laminated lamp support part 160 which is a support part provided in the cabin 30. That is, the laminated lamp 150 is provided in a state where the laminated lamp 150 is supported with respect to the cabin 30 via the laminated lamp support part 160 provided in the cabin left side face part 37.

Regarding the arrangement of the laminated lamp 150, the laminated lamp 150 is supported by the laminated lamp support part 160 in the cabin left side face part 37 and thereby arranged in the central part of the machine body in the left-right direction. As shown in Fig. 3, in the front part of the combine harvester 1, the cabin 30 occupies a range of approximately half on the right side, and the grain culm conveying device 5f of the reaping part 5 occupies a range of approximately half on the left side, in the left-right direction (width direction) of the machine body. In such a configuration, the laminated lamp 150 is arranged in a position adjacent to the left side of the roof part 35 of the cabin 30 and is thus substantially located at the center in the left-right direction of the machine body.

Regarding the support configuration of the laminated lamp 150, the laminated lamp 150 is supported with respect to the cabin 30 using the supporting structure of the antenna unit 60 with respect to the cabin 30. That is, the laminated lamp support part 160 is configured to include the support frame 70 in a configuration including: the antenna unit 60 provided above the cabin left side face part 37, which is one side face part of the right and left side face parts of the cabin 30; and the support frame 70 that is provided in the cabin left side face part 37 and supports the antenna unit 60.

The laminated lamp 150 is provided in a state where the laminated lamp 150 is supported with respect to the support frame 70 via the mounting bracket 91 and the support bracket 90 on the rear side, an arm plate 161, a lower support plate 162, a hinge member 163, and a support stay 164. That is, the laminated lamp support part 160 has the support frame 70, the mounting bracket 91 and the support bracket 90 on the rear side, the arm plate 161, the lower support plate 162, the hinge member 163, and the support stay 164. Hereinafter, the support bracket 90 and the mounting bracket 91 on the rear side constituting the laminated lamp support part 160 among the rear and front support brackets 90 and the rear and front mounting brackets 91 provided on the support frame 70 are referred to as the "rear side support bracket 90" and the "rear side mounting bracket 91," respectively.

The arm plate 161 is a flat plate-shaped member having an approximately trapezoidal shape in the plan view and forms an arm-like part extending rearward from the rear side support bracket 90 with the front-rear direction as the longitudinal direction. A right side edge part of the arm plate 161 is a straight side part along the front-rear direction, and a left side edge art of the arm plate 161 is an inclination side part inclining from the rear side to the front side in the direction from the right side to the left side. Accordingly, the arm plate 161 has a shape with the width (dimension in the left-right direction) thereof gradually widened from the rear side to the front side.

The approximately whole of the arm plate 161 is a plate body part 161a which is a horizontal face part, and the arm plate 161 has a bent face part 161b formed in a light side edge part of the plate body part 161a. The bent face part 161b is a face part orthogonally bent to a downward direction with respect to the plate body part 161a.

The arm plate 161 is provided in a state where the arm plate 161 is fixed to the rear side support bracket 90. Specifically, the arm plate 161 is fixed to the rear side support bracket 90 at two, left and right, locations by the fixing bolts 96 for fixing the antenna unit 60, with the plate body part 161a overlapping the support face part 90b from the bottom side, in a state where a front side end part having a dimension in the width direction smaller than that of the rear side support bracket 90 is inserted into the rear side support bracket 90 from the rear side.

The fixing bolts 96 each penetrate, from the bottom side, a hole part formed in the plate body part 161a and a hole part 90e of the rear side support bracket 90 and are screwed and inserted into the female screw part 97 provided on the antenna unit 60 side. That is, the arm plate 161 is fastened, by two fixing bolts 96, to the antenna unit 60 together with the rear side support bracket 90 and thereby fixed to the rear side support bracket 90. The rear side support bracket 90 is fixed, by the fixing bolts 94 or the like, to the rear side mounting bracket 91 fixedly provided to the support frame 70 as described above. The arm plate 161 is mounted to the support frame 70 via the rear side mounting bracket 91 and the rear side support bracket 90 in this manner.

The lower support plate 162 is fixedly provided onto a rear end part of the arm plate 161. The lower support plate 162 has a body part that has an approximately "L" shaped bent shape in the left side view. The body part of the lower support plate 162 has a fixing face part 162a and a support face part 162b as face parts forming an approximately "L" shaped bent shape.

The lower support plate 162 is fixed to the arm plate 161 at two, left and right, locations by fixing bolts 165 in a state where the fixing face part 162a overlaps the plate body part 161a. The fixing bolts 165 penetrate, from the bottom side of the arm plate 161, the plate body part 161a and the fixing face part 162a and are screwed and inserted into nut parts 166 provided on the fixing face part 162a. The support face part 162b stands upward on the rear side of the fixing face part 162a with the front-rear direction as the plate thickness direction.

The hinge member 163 has a lower mounting plate part 163a which is a lower side blade, an upper mounting plate part 163b which is an upper side blade, and a support axis part 163c rotatably connecting these mounting plate parts each other. The support axis part 163c has a configuration in which an axis body such as a pin is inserted into a cylindrical tube part formed integrally with each of the lower mounting plate part 163a and the upper mounting plate part 163b. The central axis of the axis body constituting the support axis part 163c becomes a rotation axis C1 for the mounting plate parts in the hinge member 163.

The hinge member 163 is mounted to the rear side of the support face part 162b in an orientation with the rotation axis direction of the support axis part 163c as the left-right direction with respect to the lower support plate 162. The hinge member 163 is fixed to the lower support plate 162 at two, left and right, locations by fixing bolts 168 in a state where the lower mounting plate part 163a overlaps the support face part 162b from the rear side. The fixing bolts 168 penetrate, from the rear side of the hinge member 163, the lower mounting plate part 163a and the support face part 162b and are screwed and inserted into nut parts 169 provided on the front side of the support face part 162b.

The hinge member 163 fixes the lower mounting plate part 163a to the support face part 162b of the lower support plate 162 and places the support axis part 163c below an upper end of the lower support plate 162 such that an upper part of the upper mounting plate part 163b upwardly extends from an upper end of the support face part 162b. Such a configuration controls rotation toward the front side of the upper mounting plate part 163b through contact of a lower part of the upper mounting plate part 163b with the support face part 162b from the rear side in the hinge member 163 with respect to the rotation of the upper mounting plate part 163b on the support axis part 163c relative to the lower mounting plate part 163a. On the other hand, rotation of the upper mounting plate part 163b from the vertical state toward the rear side in the hinge member 163 is allowed.

The support stay 164 is composed of a bent plate-shaped member and has a horizontal support face part 164a for supportively placing the laminated lamp 150 above the arm plate 161. The support stay 164 has a vertical support face part 164b with the front-rear direction as the plate thickness direction, and the support face part 164a horizontally extends from an upper end of the vertical support face part 164b toward the front. The support stay 164 has a right side face part 164c provided on the right side of the support face part 164a and the vertical support face part 164b. A bent face part 164d bending downward at a right angle with respect to the support face part 164a is formed on the left side of the support face part 164a.

The support stay 164 is fixed to the hinge member 163 by welding or the like in a state where a lower end part of the vertical support face part 164b overlaps the upper mounting plate part 163b from the rear side. The support stay 164 thus becomes a part rotating integrally with the upper mounting plate part 163b around the support axis part 163c of the hinge member 163.

The laminated lamp 150 is supportively placed on the support face part 164a in the support stay 164. The support face part 164a is a rectangular plate-shaped part and has a dimension allowing the whole of the laminated lamp 150 forming a circular outer shape in the plan view to be located within the rage of the outer shape. The bottom face part 152 of the laminated lamp 150 is supportively fixed to the support face part 164a with an upper face of the support face part 164a of the support stay 164 as the placing face.

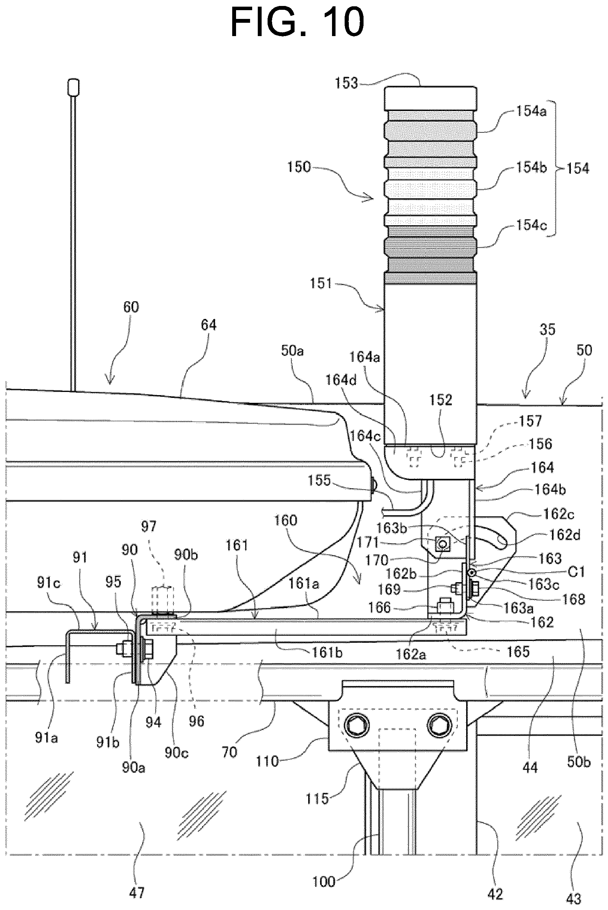

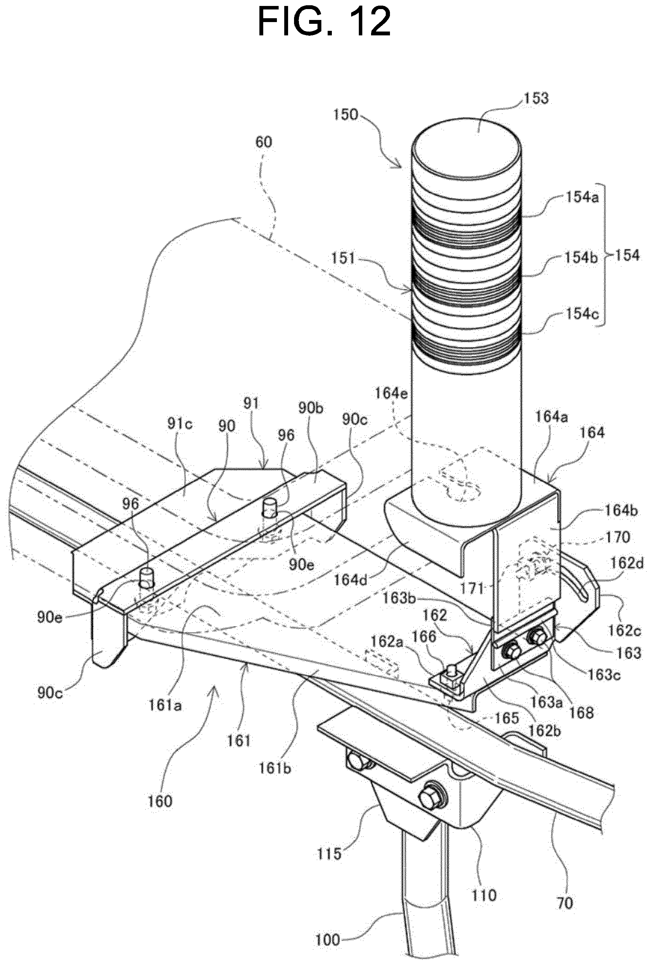

The laminated lamp 150 has a plurality of (for example three) screw parts 156 protruding downward from the bottom face part 152 (see Fig. 10). The laminated lamp 150 is fastened and fixed to the support face part 164a by causing the screw parts 156 to penetrate the support face part 164a of the support stay 164 from above and by screwing the screw parts 156 into nuts 157 below the support face part 164a. A plurality of hole parts through which the screw parts 156 penetrate is formed in the support face part 164a. An opening part 164e through which a connection cord 155 extending from the bottom face part 152 of the laminated lamp 150 passes is formed on the support face part 164a (see Fig. 12).

In the support structure of the laminated lamp 150 as described above, the laminated lamp support part 160 includes a member connecting the laminated lamp 150 and the antenna unit 60 together. In the laminated lamp support part 160, the rear side support bracket 90 directly supporting the antenna unit 60 and the arm plate 161, the lower support plate 162, the hinge member 163, and the support stay 164 constitute the member connecting the laminated lamp 150 and the antenna unit 60 together. That is, the antenna unit 60 and the laminated lamp 150 are connected together via these constituent members of the laminated lamp support part 160.

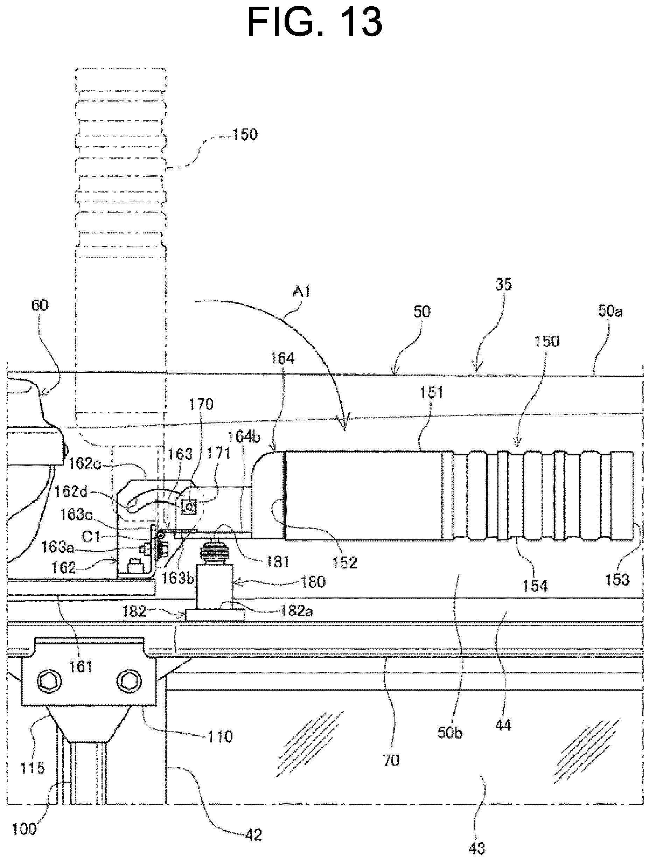

The laminated lamp 150 supported in a standing state by the laminated lamp support part 160 as described above is provided in a manner that the posture of the laminated lamp 150 is changeable. In the present embodiment, the laminated lamp 150 is provided such that the laminated lamp 150 leans rearward by means of the hinge member 163 with the rotation axis C1 as the center, and the posture of the laminated lamp 150 is changed by leaning rearward from the standing state. That is, as shown in Fig. 13, the laminated lamp 150 is provided such that the laminated lamp 150 rotates rearward 90° or approximately 90° around the rotation axis C1 to take a posture with the direction of the central axis of the cylindrical outer shape along the front-rear direction (see arrow A1).

The laminated lamp support part 160 is configured in a manner that the posture of the laminated lamp 150 is changeable from a use posture, which is a posture of the laminated lamp 150 in a use state, to a retracted posture, which is a posture of the laminated lamp 150 in a retracted state. The use posture of the laminated lamp 150 is, as shown in Fig. 10 and the like, a posture of the laminated lamp 150 in which the central axis direction (longitudinal direction) of the cylindrical outer shape is the up-down direction. The retracted posture of the laminated lamp 150 is, as shown in Fig. 13, a posture of the laminated lamp 150 in which the upper face part 153 faces the rear side, and the longitudinal direction of the laminated lamp 150 is the front-rear direction.

A configuration of the laminated lamp support part 160 for changing the posture of the laminated lamp 150 will be described. The laminated lamp support part 160 has a configuration in which the laminated lamp 150 is supported with respect to the upper mounting plate part 163b of the hinge member 163 via the support stay 164. In this configuration, the standing state of the support stay 164 and the laminated lamp 150 is held by fixing the support stay 164 to a guide plate part 162c of the lower support plate 162. The guide plate part 162c is provided as part of the lower support plate 162.

The guide plate part 162c is a plate-shaped part with the left-right direction as the plate thickness direction and is formed by bending at right angle upwardly with respect to the fixing face part 162a on the right side of the fixing face part 162a. A front part of the guide plate part 162c overlaps the right side face part 164c of the support stay 164 from the right side, and a rear part of the guide plate part 162c protrudes rearward from the vertical support face part 164b of the support stay 164.

The support stay 164 holds the posture thereof by fixing, with a part fixed by a fixing bolt 170, the right side face part 164c with respect to the guide plate part 162c. A guide hole 162d through which the fixing bolt 170 penetrates is formed in an upper part of the guide plate part 162c.

The fixing bolt 170 penetrates the guide hole 162d from the right side of the guide plate part 162c and is screwed and inserted into a nut part 171 provided on the left side of the right side face part 164c.

The guide hole 162d has an upwardly convex circular arc-like long hole shape along a circular arc with the rotation axis C1 as the center viewed from the axis direction of the rotation axis C1 (for example, left side view). The guide hole 162d is formed within the range (angular range of approximately 90°) in which the support stay 164 can move between positions respectively corresponding to the use posture and the retracted posture of the laminated lamp 150 in a state where the fixing bolt 170 penetrates the guide hole 162d.

The posture of the laminated lamp 150 in the use posture is changed as follows. Firstly, the fastening with the fixing bolt 170 is unfastened, allowing the support stay 164 on which the laminated lamp 150 is supportively placed to relatively rotate rearward with respect to the guide plate part 162c around the rotation axis C1. In this state, operation to lean rearward the laminated lamp 150 and the support stay 164 is carried out so that the laminated lamp 150 takes the retracted posture (Fig. 13, see arrow A1).

Thereafter, the fixing bolt 170 is fastened to the nut part 171 to fix the support stay 164 with respect to the guide plate part 162c, and the laminated lamp 150 is thereby fixed and held in the retracted posture. The part fixed by the fixing bolt 170 which has been positioned in a front end part of the guide hole 162d in the use state of the laminated lamp 150 moves to a rear end part of the lower support plate 162 through change of the posture of the laminated lamp 150 to the retracted posture.

With respect to the holding of the laminated lamp 150 in the retracted posture, a locking action, with respect to the guide plate part 162c, of the fixing bolt 170 penetrating the guide hole 162d may be used to a positioning action for regulating downward rotation of the laminated lamp 150 in a recumbent state. In Fig. 13, the laminated lamp 150 in the use posture is shown by a dashed double-dotted line. In Fig. 6, the laminated lamp 150 in the retracted posture is shown by a dashed double-dotted line.

When the laminated lamp 150 in the retracted posture is returned to the use posture, fastening with the fixing bolt 170 is unfastened, the laminated lamp 150 and the support stay 164 are rotated around the rotation axis C1 to stand, making the laminated lamp 150 take the use posture, and fastening same with the fixing bolt 170. The laminated lamp 150 is thereby fixed and held in the use posture.

As shown in Fig. 13, when the laminated lamp 150 takes the retracted state, the whole of the laminated lamp 150 is positioned below the upper face part 50a of the roof panel 50. That is, the upper end of the outer peripheral face part 151 of the laminated lamp 150 in the retracted posture is portioned below the upper face part 50a of the roof panel 50. In addition, as shown in Fig. 6, with respect to the left-right direction, a left end part (left end of the outer peripheral face part 151) of the cylindrical outer shape of the laminated lamp 150 in the retracted posture is positioned in approximately the same position as the left end of the support frame 70. Accordingly, with respect to the left-right direction, the whole of the laminated lamp 150 is positioned closer to the cabin 30 side (right side) than the left end of the case 64 of the antenna unit 60 in either posture, the use posture or the retracted posture.

The mode of the change in the posture of the laminated lamp 150 from the use posture to the retracted posture is not limited to the present embodiment. The angle (tilting angle) of rearward rotation of the laminated lamp 150 when the posture of the laminated lamp 150 in the use posture is changed to the retracted posture is approximately 90° in the present embodiment. However, the magnitude of the rotation angle is not particularly limited. In addition, the laminated lamp 150 in the use posture is leaned rearward to take the retracted posture in the present embodiment. However, the direction in which the laminated lamp 150 is leaned is also not particularly limited.

The posture of the laminated lamp 150 is changed to the retracted posture when the combine harvester 1 is transported by a truck or the like, or the combine harvester 1 itself is housed in a shed or the like, for example. That is, in the configuration in which the upper face part 50a of the roof panel 50 is the highest part of the combine harvester 1, the laminated lamp 150 takes the retracted posture so that no part protrudes above the upper face part 50a, from the viewpoint of height limitation. Accordingly, the retracted posture of the laminated lamp 150 is preferably a posture in which the whole of the laminated lamp 150 is positioned below the upper face part 50a of the roof panel 50.

With respect to the change in the posture of the laminated lamp 150, a detection switch 180 that detects a change in the posture of the laminated lamp 150 from the use posture to the retracted posture is provided in the combine harvester 1 as a posture change detection device (see Fig. 13). The detection switch 180 is a contact type sensor for detecting the laminated lamp 150 positioned in the retracted posture. The detection switch 180 is rendered detection ON when the posture of the laminated lamp 150 in the use posture is changed to the retracted posture. The detection switch 180 is connected to a controller included in the combine harvester 1, and a detection signal from the detection switch 180 is input into the controller.

As shown in Fig. 13, the detection switch 180 is a push switch having a push button 181 and is turned on when the push button 181 is pushed. The detection switch 180 is supportively fixed in a predetermined position on the support frame 70 via a support stay 182, which is a support member, with the push button 181 side as the upper side. The support stay 182 is fixed to the support frame 70 by welding or the like to form a horizontal support face 182a. The detection switch 180 is supportively fixed onto the support face 182a of the support stay 182 by a fixing tool such as a bolt.

The detection switch 180 is provided in a position in the push button 181 in which the detection switch 180 is brought into contact with the vertical support face part 164b of the support stay 164 rotating, around the rotation axis C1, integrally with the laminated lamp 150 when the laminated lamp 150 takes the retracted posture. However, the detection switch 180 may be provided in a position in the push button 181 in which the detection switch 180 is brought into contact with the outer peripheral face part 151 of the laminated lamp 150 taking the retracted posture.

According to the configuration provided with the detection switch 180 as described above, through operation for changing the posture of the laminated lamp 150 in the use posture to the retracted posture, the support stay 164 rotating integrally with the laminated lamp 150 acts to push the push button 181, and the detection switch 180 is turned on. On the other hand, by raising the laminated lamp 150 in the retracted posture to change the posture to the use posture, the pushing action against the push button 181 is canceled as the support stay 164 upwardly rotates, and the detection switch 180 is turned off.

The detection signal from the detection switch 180 is used to control the motion of the discharging auger 9 using a controller, for example. In this case, the controller is configured to switch, on the basis of the detection signal of the detection switch 180, for example, the control mode relating to the motion of the discharging auger 9.

Specifically, when the detection switch 180 is in an off state, that is, when the laminated lamp 150 is in the use posture, the controller employs, as a control mode for a pivot motion and vertical elevation/rotation motion of the discharging auger 9, a control mode during using the laminated lamp, where the discharging auger 9 moves to draw a trajectory in which the discharging auger 9 does not interfere the laminated lamp 150 protruding upward from the roof panel 50. An angle sensor detecting the pivoting angle of the pivot motion of the discharging auger 9 is provided, and the motion of the discharging auger 9 can also be controlled, on the basis of a value detected by the angle sensor, using the controller so that the discharging auger 9 does not come into contact with the laminated lamp 150.

On the other hand, when the detection switch 180 is in an on state, that is, when the laminated lamp 150 takes the retracted posture, the laminated lamp 150 is positioned below the roof panel 50 and inward from (to the right of) the antenna unit 60, and the discharging auger 9 is free from interference. In this case, the controller employs, as a control mode for the motion of the discharging auger 9, a control mode during not using the laminated lamp (during normal times), which is independent of the laminated lamp 150. Such control of the motion of the discharging auger 9 can be employed in both of automatic operation by the controller and manual operation by an operation tool provided in the driving part 12.

According to the combine harvester 1 according to the present embodiment with the configuration as described above, the laminated lamp 150 for providing an indication used for notification of various states of the machine body can be arranged in a position easily visible from the outside of the machine body and can be firmly supported.

The laminated lamp 150 is provided in the state of being supported by the laminated lamp support part 160 with respect to the cabin 30. According to such a configuration, the laminated lamp 150 can be securely supported, by the support structure of the laminated lamp support part 160, with respect to the cabin 30 in which the roof panel 50 is arranged in a relatively high part in the combine harvester 1. The laminated lamp 150 can be thereby positioned on a top part of the combine harvester 1, and good viewability of the laminated lamp 150 can be achieved even from a position around the combine harvester 1 or apart from the combine harvester 1.

In particular, according to the configuration in which the laminated lamp 150 is provided such that the whole of the light emitting indication part 154 is positioned above the upper face part 50a of the roof panel 50 of the cabin 30 at least in the up-down direction, the laminated lamp 150 can be visually observed from all directions around the combine harvester 1. Good visibility of the laminated lamp 150 can be obtained thereby without providing multiple laminated lamps 150 for the combine harvester 1.

The laminated lamp 150 is arranged in the central part of the machine body of the combine harvester 1 in the left-right direction by providing the laminated lamp 150 in a left upper part of the cabin 30. According to such a configuration, good visibility of the laminated lamp 150 around the combine harvester 1 can be obtained in a well-balanced manner from both the right and left outer sides of the combine harvester 1.

The laminated lamp 150 is provided in a manner that the posture of the laminated lamp 150 is changeable. According to such a configuration, the posture of the laminated lamp 150 can be changed according to, for example, the necessity for the laminated lamp 150 in the working form of the combine harvester 1, and good handleability of the combine harvester 1 can be obtained.

In the configuration in which the laminated lamp 150 is arranged so as to protrude upward from the roof panel 50 of the cabin 30 as in the present embodiment, the laminated lamp 150 may obstruct the movement of the machine body when the machine body is moved for transportation of the combine harvester 1 or the combine harvester 1 is housed in a shed or the like, for example. Interference with another device such as the discharging auger 9 moving on the roof panel 50 of the cabin 30 must be avoided, for example, for the laminated lamp 150 protruding above the roof panel 50 of the cabin 30.

The laminated lamp support part 160 is then configured such that the posture of the laminated lamp 150 in the standing state is changed from the use posture to the retracted posture in the recumbent state. According to such a configuration, the laminated lamp 150 is prevented from obstructing the movement of the combine harvester 1 by causing the laminated lamp 150 to take the retracted posture when the combine harvester 1 is transported or housed, for example. Good handleability of the combine harvester 1 can be obtained thereby.

With respect to change of the posture of the laminated lamp 150, the laminated lamp support part 160 is configured to rotate the laminated lamp 150 using the rotation structure of the hinge member 163 and the fixing structure to the guide plate part 162c and thereby change the posture of the laminated lamp 150. According to such a configuration, the posture of the laminated lamp 150 can be changed through a simple operation with a simple structure and simple operation.

The laminated lamp support part 160 is configured to cause the laminated lamp 150 in the standing state to take the retracted posture by leaning rearward the laminated lamp 150 with the longitudinal direction as the front-rear direction. According to such a configuration, since the laminated lamp 150 in the retracted posture is disposed along the cabin left side face part 37, the laminated lamp 150 can be compactly housed, and interference between the laminated lamp 150 and another device can be prevented.

The combine harvester 1 is provided with the antenna unit 60 arranged in the upper part of the cabin left side face part 37 of the cabin 30, and the laminated lamp 150 is supported, via a predetermined support member, to the support frame 70 supporting the antenna unit 60 with respect to the cabin left side face part 37.

According to such a configuration, the support structure of the antenna unit 60 can be used to support the laminated lamp 150 with respect to the cabin 30. Therefore, a device relating to autonomous traveling of the combine harvester 1 can be compactly arranged and configured.

The laminated lamp support part 160 is configured to include the member connecting the antenna unit 60 and the laminated lamp 150 together, and the antenna unit 60 and the laminated lamp 150 are integrally configured. According to such a configuration, the antenna unit 60 and the laminated lamp 150 can be handled as an integrated configuration, these devices can be compactly arranged, and these devices can be preferably integrated into the cabin 30.

The combine harvester 1 has the detection switch 180 for detecting the change of the posture of the laminated lamp 150 to the retracted posture. According to such a configuration, the controller can recognize, using the detection signal from the detection switch 180, that the laminated lamp 150 is in the retracted posture. The motion of the discharging auger 9 can be effectively operated and controlled according to the posture of the laminated lamp 150, while preventing interference with the laminated lamp 150 thereby.

The device for detecting the change of the posture of the laminated lamp 150 to the retracted posture is not limited to the push switch, and a contact type sensor in another form, a non-contact type sensor, and the like can be used as appropriate. A device for detecting the laminated lamp 150 in the use posture may be provided.

The combine harvester according to the present invention described with reference to the above embodiment is not limited to the above-described embodiment, and may employ various modes within a range in adherence with the spirit of the present invention.

The laminated lamp 150 is provided with respect to the cabin left side face part 37 of the cabin 30 via the laminated lamp support part 160 in the embodiment described above. However, the arrangement position of the laminated lamp 150 with respect to the cabin 30 is not limited. The laminated lamp 150 may be arranged on the right side, rear side, or the front side with respect to the cabin 30.

The laminated lamp support part 160 is configured to support the laminated lamp 150 in the use posture at a predetermined height level in the embodiment described above. However, the laminated lamp support part 160 may be configured such that the height level of the laminated lamp 150 is changed. Specifically, the height level of the laminated lamp 150 can be adjusted according to the position in which the hinge member 163 is fixed by the fixing bolt 168, by providing, at multiple locations in the support face part 162b in the up-down direction, the parts into which the fixing bolts 168 are screwed and inserted to fix the hinge member 163 with respect to the lower support plate 162, or by making the hole part through which the fixing bolts 168 penetrate a vertically long hole, for example. In this case, the guide hole 162d through which the fixing bolt 170 penetrates is also provided, as appropriate, at multiple positions in the up-down direction.

With respect to the change of the height level of the laminated lamp 150, the laminated lamp 150 may be provided such that the upper face part 153 can move in the up-down direction to the height level at which the upper face part 153 is positioned below the height of the upper face part 50a of the roof panel 50. According to such a configuration, the laminated lamp 150 can be put in the retracted state by moving downward the laminated lamp 150 in the use posture while keeping the posture.

The present technique may have the following configurations. The configurations described below can be selected, omitted, and arbitrary combined.
(1) A work vehicle including a cabin covering a driving part, the work vehicle including
   a state indication device for providing an indication used for notification of various states of a machine body of the work vehicle, in which
   the state indication device is provided in a state of being supported by a support part provided in the cabin.
(2) The work vehicle according to (1) above, in which the state indication device is arranged in a central part of the machine body in the left-right direction.
(3) The work vehicle according to (1) or (2) above, in which the state indication device is provided in a manner that the posture of the state indication device is changeable.
(4) The work vehicle according to (3) above, in which the support part is configured in a manner that the posture of the state indication device is changeable from a use posture which is a posture of the state indication device in a use state to a retracted posture which is a posture of the state indication device in a retracted state.
(5) The work vehicle according to any one of (1) to (4) above, including
   an antenna unit provided on an upper part of one side face part among right and left side face parts of the cabin, and
   an antenna support member provided on the one side face part and supporting the antenna unit, in which
   the support part includes the antenna support member.
(6) The work vehicle according to (5) above, in which the support part includes a member connecting the state indication device and the antenna unit together.

### REFERENCE SIGNS LIST

1 Combine harvester (work vehicle)
9 Discharging auger
12 Driving part
30 Cabin
37 Cabin left side face part
50 Roof panel
60 Antenna unit
70 Support frame (antenna support member)
90 Rear side support bracket
150 Laminated lamp (state indication device)
154 Light emitting indication part
160 Laminated lamp support part (support part)
161 Arm plate
162 Lower support plate
163 Hinge member
164 Support stay
180 Detection switch

## Claims

1. A work vehicle including a cabin covering a driving part, the work vehicle comprising:
a state indication device for providing an indication used for notification of various states of a machine body of the work vehicle, wherein
the state indication device is provided in a state of being supported by a support part provided in the cabin.

2. The work vehicle according to claim 1, wherein the state indication device is arranged in a central part of the machine body in a left-right direction.

3. The work vehicle according to claim 1 or 2, wherein the state indication device is provided in a manner that a posture of the state indication device is changeable.

4. The work vehicle according to claim 3, wherein the support part is provided in a manner that the posture of the state indication device is changeable from a use posture which is a posture of the state indication device in a use state to a retracted posture which is a posture of the state indication device in a retracted state.

5. The work vehicle according to claim 1, comprising:
an antenna unit provided on an upper part of one side face part among right and left side face parts of the cabin; and
an antenna support member provided on the one side face part and supporting the antenna unit, wherein
the support part includes the antenna support member.

6. The work vehicle according to claim 5, wherein the support part includes a member connecting the state indication device and the antenna unit together.
